# EUROPÄISCHE PATENTSCHRIFT

(11) **EP 2 619 820 B1**
(45) Veröffentlichungstag und Bekanntmachung des Hinweises auf die Patenterteilung: **25.11.2015**
(21) Anmeldenummer: 11751854.8
(22) Anmeldetag: 19.08.2011
(51) Int. Cl.: H01M 2/02, H01M 2/38, H01M 10/654, H01M 10/6554, H01M 10/613

(54) **BATTERIE MIT VERBESSERTER WÄRMEABFUHR DURCH NUTZUNG DES KAPILLAREFFEKTS**
BATTERY WITH IMPROVED HEAT DISSIPATION BY USE OF THE CAPILLARY EFFECT
BATTERIE DONT LA DISSIPATION DE CHALEUR EST AMÉLIORÉE PAR L'UTILISATION DE L'EFFET CAPILLAIRE

(30) Priorität: 23.09.2010 DE 102010041285
(43) Veröffentlichungstag der Anmeldung: 31.07.2013
(73) Patentinhaber: Robert Bosch GmbH, 70442 Stuttgart (DE); Samsung SDI Co., Ltd., Gyeonggi-do 446-557 (KR)
(72) Erfinder: LEUTHNER, Stephan, 71229 Leonberg (DE)
(74) Vertreter: Bee, Joachim
(86) Internationale Anmeldenummer: PCT/EP2011/064263
(87) Internationale Veröffentlichungsnummer: WO 2012/038163

(56) Entgegenhaltungen:
- DE-A1-102008 015 622
- US-A- 4 004 067
- US-A- 4 177 328
- US-A- 5 376 479
- US-A1- 2003 162 085
- US-A1- 2007 154 789
- US-B2- 7 709 141

## Beschreibung

Die vorliegende Erfindung betrifft eine Batterie mit verbesserter Wärmeabfuhr durch Nutzung des Kapillareffekts, insbesondere betrifft die vorliegende Erfindung eine Lithium-Ionen-Batteriezelle mit verbesserter Wärmeabfuhr.

### Stand der Technik

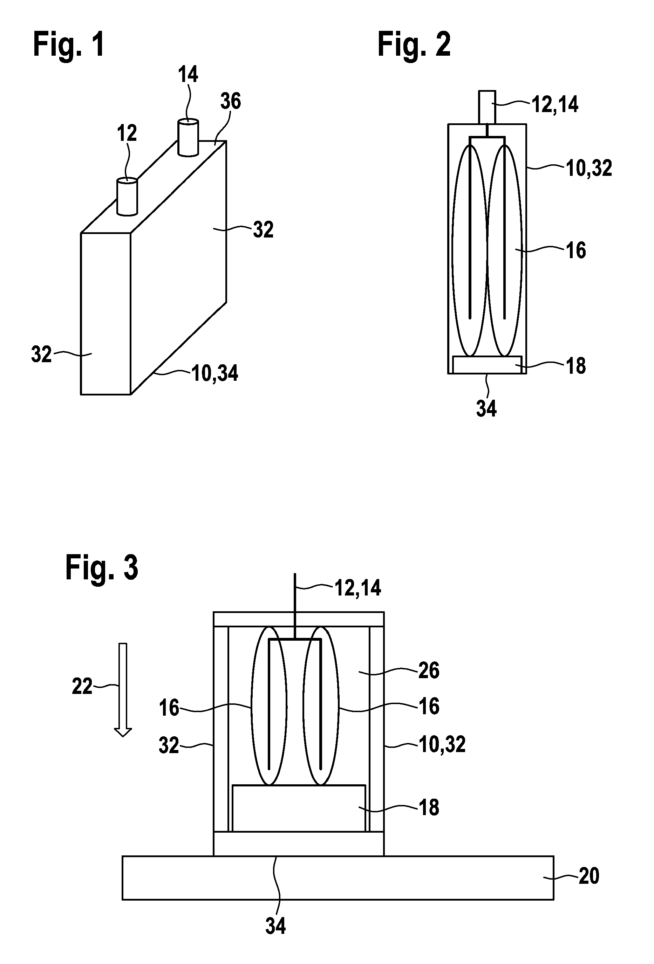

Hochleistungsbatterien wie beispielsweise Lithium-Ionen-Batterien müssen während des Betriebs (Laden/Entladen) gekühlt werden. In den Figuren 1 bis 3 ist eine herkömmliche Lithium-Ionen-Batterie schematisch dargestellt. Eine Lithium-Ionen-Batterie weist regelmäßig ein flüssigkeits- und gasdichtes Gehäuse 10 auf, wobei das Gehäuse 10 durch unterschiedliche Bauformen ausgebildet sein kann. Beispielsweise kann das Gehäuse 10 - wie in den Figuren 1 bis 3 dargestellt - quaderförmig ausgebildet sein; es sind jedoch auch andere Bauformen möglich. In jedem Fall verfügt das Gehäuse 10 über eine Oberseite 36, eine Unterseite 34 und mindestens eine Seitenfläche 32, die zusammen ein gas- und flüssigkeitsdichtes Gehäuse ausbilden. Die äußere Kontaktierung der Lithium-Ionen-Batterie erfolgt durch einen ersten Anschluss 12 und einen zweiten Anschluss 14, über welche der Lade- oder Entladeprozess geführt wird. Die Anschlüsse 12 und 14 sind durch eine Wand des Gehäuses 10, vorzugsweise die Oberseite 36, geführt und kontaktieren die innerhalb des Gehäuses 10 befindlichen Elektroden, welche beispielsweise als Batteriewickel 16 ausgebildet sein können. Bei einer Lithium-Ionen-Batterie sind die Elektroden durch einen (hier nicht dargestellten) Separator voneinander getrennt. Mit anderen Worten sind die beiden Elektroden und der Separator ineinander spiralförmig aufgewickelt und dadurch als Batteriewickel 16 - wie in Figur 2 dargestellt - ausgebildet. Es ist alternativ jedoch auch möglich, die beiden Elektroden übereinander zu stapeln. Im Fall der Verwendung von Battteriewickeln 16 können ein oder mehrere Batteriewickel 16 innerhalb des Gehäuses 10 angeordnet und durch eine Arretierung 18 an der Unterseite 34 des Gehäuses 10 fixiert sein. Weiterhin ist innerhalb des Gehäuses 10 ein Elektrolyt 26 vorgesehen, der beispielsweise im Falle von Lithium-Ionen-Batterien den Transport der Lithium-Ionen zwischen den Elektroden ermöglicht. Ein solcher Elektrolyt 26 kann beispielsweise aus einem apriorischen Lösungsmittel wie Ethylencarbonat, Propylencarbonat oder Dimethylcarbonat oder Mischungen daraus bestehen.

Zur Kühlung von Lithium-Ionen-Batterien während des Betriebs ist es beispielsweise bekannt, eine Kühlplatte 20 an der Unterseite 34 des Gehäuses 10 vorzusehen. Weiterhin ist es möglich, so genannte Kühlbleche zwischen den einzelnen Batteriezellen anzuordnen, so dass Wärme nicht nur zur unter den Batteriezellen angeordneten Kühlplatte 20, sondern auch in Richtung der Kühlbleche abgeführt werden kann. Der Einsatz solcher zusätzlicher Kühlbleche ist jedoch nachteilig, da sich hierdurch Gewicht und Volumen der Batteriezelle entsprechend erhöhen.

Darüber hinaus ist aus DE 10 2008 043 808 A1 eine Batterie mit einem Gehäuse, darin befindlichen Elektroden und einem Elektrolyt bekannt, wobei die Batterie zusätzlich einen Vorratsbehälter zum Nachfüllen eines Elektrolyten aufweist, wobei innerhalb des Gehäuses eine Kapillare vorgesehen ist, mittels der Elektrolytflüssigkeit aus dem Vorratsbehälter in das Gehäuse gelangen kann.

Weitere Batterieanordnungen sind aus US 7 709 141 B2, US 2007/154789 A1,

US 4 004 067 A, US 4 177 328 A, US 5 376 479 A und US 2003/162085 A1 bekannt.

### Offenbarung der Erfindung

Erfindungsgemäß wird eine Lithium-Ionen-Batterie zur Verfügung gestellt, mit einer ersten Elektrode, einer zweiten Elektrode und einem gasdichten Gehäuse, wobei die Elektroden jeweils als Batteriewickel ausgebildet sind, wobei die erste Elektrode, die zweite Elektrode und ein dazwischen liegender Separator spiralförmig ineinander eingewickelt sind, wobei das Gehäuse eine Unterseite, eine Oberseite und mindestens eine Seitenfläche aufweist und ein Elektrolyt innerhalb des Gehäuses angeordnet ist, wobei sich der Batteriewickel lediglich über einen Teil der Unterseite des Gehäuses erstreckt, so dass zwischen dem Batteriewickel und der Seitenfläche des Gehäuses umlaufend eine Lücke ausgebildet ist, durch die ein Stofftransport des Elektrolyten erfolgen kann, wobei auf der Innenseite einer Seitenfläche des Gehäuses mindestens eine Kapillarstruktur angeordnet ist, wobei die mindestens eine Kapillarstruktur sich von der Unterseite zur Oberseite des Gehäuses erstreckt.

Die Idee der vorliegenden Erfindung besteht darin, den Wärmetransport innerhalb des Gehäuses einer Batterie zu verbessern, so dass eine Kühlung der Batterie, die beispielsweise durch eine auf der Unterseite der Batterie angebrachte Kühlplatte vorgenommen wird, effizienter realisiert werden kann. Dabei wird der innerhalb des Gehäuses befindliche Elektrolyt für den Wärmeabtransport genutzt. Insbesondere ist es vorgesehen, innerhalb des Gehäuses eine Zirkulation des Elektrolyten aufgrund von Kapillarstrukturen zu ermöglichen, bei der der Elektrolyt abwechselnd verdunstet/verdampft und kondensiert und somit einen effizienten Wärmeabtransport realisiert.

Vorzugsweise ist die mindestens eine Kapillarstruktur durch eine Kunststofffolie mit Kanalstrukturen oder durch eine als Gestrick geformte Kunststofffolie ausgebildet.

Vorzugsweise ist an der Unterseite des Gehäuses eine Kühlplatte angebracht. In einer besonders bevorzugten Ausführungsvariante kontaktiert die Kühlplatte direkt die Unterseite des Gehäuses der Batterie. Als Kühlplatte im Sinne der vorliegenden Erfindung wird eine aus einem Material mit hoher Wärmeleitfähigkeit, beispielsweise einem Metall, bestehende Platte verstanden, die mit einer Wärmesenke zur Abführung der Wärme der Batterie verbunden ist. In der Kühlplatte können auch weitere Kühlkreisläufe, beispielsweise mit einem flüssigen Kühlmedium, ausgebildet sein.

Gemäß der Erfindung ist die Kapillarstruktur an mindestens einer der Seitenflächen des Gehäuses angeordnet und erstreckt sich von der Unterseite zur Oberseite des Gehäuses. Durch die sich von der Unterseite zur Oberseite erstreckende Kapillarstruktur ist es möglich, dass sich der Elektrolyt, welcher sich an der Unterseite des Gehäuses beispielsweise aufgrund einer Kondensation im Bereich der Kühlplatte im flüssigen Aggregatzustand befindet, in besonders einfacher Weise mittels der Kapillarstruktur entlang der seitlichen Gehäuseinnenwand nach oben bewegen kann. Aufgrund der an den Seiteninnenwänden des Gehäuses angebrachten Kapillarstruktur kann somit ein besonders effizienter Stofftransport des Elektrolyten innerhalb des Gehäuses realisiert werden. Insbesondere ist es im Falle einer an der Unterseite des Gehäuses angeordneten Kühlplatte möglich, einen Stoffkreislauf des Elektrolyten und damit einen effizienten Wärmeabtransport innerhalb des Gehäuses zu realisieren. Beispielsweise ist es bei entsprechender Wahl des Elektrolyten und der Batteriegeometrie möglich, dass der Elektrolyt an der Unterseite der Batterie aufgrund der Kühlwirkung der Kühlplatte im flüssigen Aggregatzustand vorliegt und sich aufgrund der Kapillarstruktur an den Seiteninnenwänden in Richtung der Oberseite des Gehäuses bewegt. So kann der Elektrolyt während seiner Bewegung entlang der Innenwände des Gehäuses die durch die Batterie während des Betriebs entstehende Wärme, die insbesondere von den Elektroden ausgeht, effizient aufnehmen, wobei der Elektrolyt nach ausreichend starker Erwärmung verdampft und somit weitere Wärme aufnimmt. Aufgrund der Kapillarwirkung an den Seiteninnenwänden entsteht eine Zirkulation, so dass der verdampfte Elektrolyt in einem weiter innen gelegenen Bereich des Gehäuses nach unten sinkt und durch die Kühlplatte erneut abgekühlt wird, wodurch ein kontinuierlicher Kreislauf entsteht, der zu einer besonders effizienten Kühlung des Batterieinnenraumes führt.

In einer bevorzugten Ausführungsvariante ist auf mindestens 15 % der Seitenfläche beziehungsweise der Seitenflächen des Gehäuses - betrachtet auf die Gesamtfläche der Seitenfläche(n) - eine Kapillarstruktur angeordnet. In einer besonders bevorzugten Ausführungsvariante ist/sind die gesamte/n Seitenfläche/n vollständig mit einer innenliegenden Kapillarstruktur bedeckt. Vorzugsweise ist die Kapillarstruktur direkt auf der Innenwand des Gehäuses aufgebracht. Vorzugsweise weist die erfindungsgemäße Batterie keine zwischen den Batteriezellen angeordneten Kühlbleche auf. Vorzugsweise erfolgt die Zirkulation des Elektrolyten innerhalb des Gehäuses aufgrund des Kapillareffektes und der natürlichen Konvektion, so dass innerhalb des Gehäuses vorzugsweise kein Mittel zur Umwälzung des Elektrolyten wie beispielsweise ein Gebläse angeordnet ist. Vorzugsweise erstrecken sich die in der mindestens einen Kapillarstruktur ausgebildeten Kanäle entlang einer Achse, die sich von der Unterseite zur Oberseite des Gehäuses erstreckt.

In einer bevorzugten Ausführungsvariante ist auf mindestens 15 % der Unterseite des Gehäuses - betrachtet auf die Gesamtfläche der Unterseite - eine Kapillarstruktur angeordnet. In einer besonders bevorzugten Ausführungsvariante ist die gesamte Unterseite vollständig mit einer innen liegenden Kapillarstruktur bedeckt. Vorzugsweise ist die Kapillarstruktur direkt auf der Unterseite (Innenwand) des Gehäuses aufgebracht. Vorzugsweise erstrecken sich die (in der auf der Unterseite angebrachten Kapillarstruktur ausgebildeten) Kanäle radial von innen nach außen. Vorzugsweise gehen die Kanäle auf der Unterseite in die Kanäle an der (den) Seitenfläche(n) unmittelbar über.

Gemäß der Erfindung sind die Elektroden jeweils als Batteriewickel ausgebildet, wobei eine erste Elektrode, eine zweite Elektrode und ein dazwischen liegender Separator spiralförmig ineinander eingewickelt sind.

Es ist weiter bevorzugt, dass eine sich im Bereich der Unterseite des Gehäuses befindende Arretierung für den mindestens einen Batteriewickel mindestens eine Perforation aufweist, die die effiziente Zirkulation des Elektrolyten von der Oberseite zur Unterseite des Gehäuses unterstützt. Dadurch kann der Wärmeabtransport innerhalb des Gehäuses weiter verbessert werden, da einerseits flüssig vorliegender Elektrolyt in effizienter Weise von der Unterseite mittels der Kapillarstruktur in Richtung Oberseite des Gehäuses transportiert wird und andererseits der nach seiner Verdampfung gasförmig vorliegende Elektrolyt aufgrund der Perforation der Arretierung für den mindestens einen Batteriewickel in effizienter Weise zur Unterseite des Gehäuses zurückströmen kann. Hierdurch wird ein besonders effizienter Kühlkreislauf des Elektrolyten innerhalb des Gehäuses realisiert. Vorzugsweise erstreckt sich der Batteriewickel lediglich über einen Teil der Unterseite des Gehäuses, so dass zwischen dem Batteriewickel und der Seitenwand des Gehäuses (bzw. den Seitenwänden des Gehäuses) umlaufend eine Lücke ausgebildet ist, durch die ein Stofftransport des Elektrolyten erfolgen kann. Durch die Perforation des Batteriewickels, deren Kanäle sich vorzugsweise von der Unterseite zur Oberseite des Gehäuses erstrecken, kann die Effizienz des Stofftransports des Elektrolyten weiter verbessert werden. Vorzugsweise erstreckt sich der Batteriewickel über einen Bereich der Unterseite des Gehäuses, der 50% bis 99%, bevorzugter 80% bis 99% der Fläche der Unterseite des Gehäuses entspricht.

Gemäß einem weiteren Aspekt der Erfindung wird ein Kraftfahrzeug mit einer erfindungsgemäßen Batterie offenbart, wobei die Batterie mit einem Antriebssystem des Kraftfahrzeuges verbunden ist.

Weitere Weiterbildungen der Erfindung sind in den Unteransprüchen angegeben und in der Beschreibung beschrieben.

### Vorteile der Erfindung

Die erfindungsgemäße Batteriezelle hat den Vorteil, dass mittels einer Kapillarstruktur, die an der Gehäuseinnenseite angeordnet ist, eine Zirkulation des Elektrolyten und dadurch eine verbesserte Wärmeabfuhr erreicht werden.

### Zeichnungen

Ausführungsbeispiele der Erfindung werden anhand der Zeichnungen und der nachfolgenden Beschreibung näher erläutert. Es zeigen:
- Figur 1: eine herkömmliche Batterie in schematischer, perspektivischer Darstellung,
- Figuren 2 und 3: eine herkömmliche Batterie in schematischer, geschnittener Darstellung,
- Figur 4: eine Batterie nach einer ersten Ausführungsvariante der Erfindung in schematischer, geschnittener Darstellung,
- Figur 5: eine bevorzugte Ausführungsvariante der erfindungsgemäß verwendeten Kapillarstruktur,
- Figur 6: eine weitere bevorzugte Ausführungsvariante der erfindungsgemäß verwendeten Kapillarstruktur, und
- Figur 7: eine Batterie nach einer zweiten Ausführungsvariante der Erfindung in schematischer, geschnittener Darstellung.

### Ausführungsformen der Erfindung

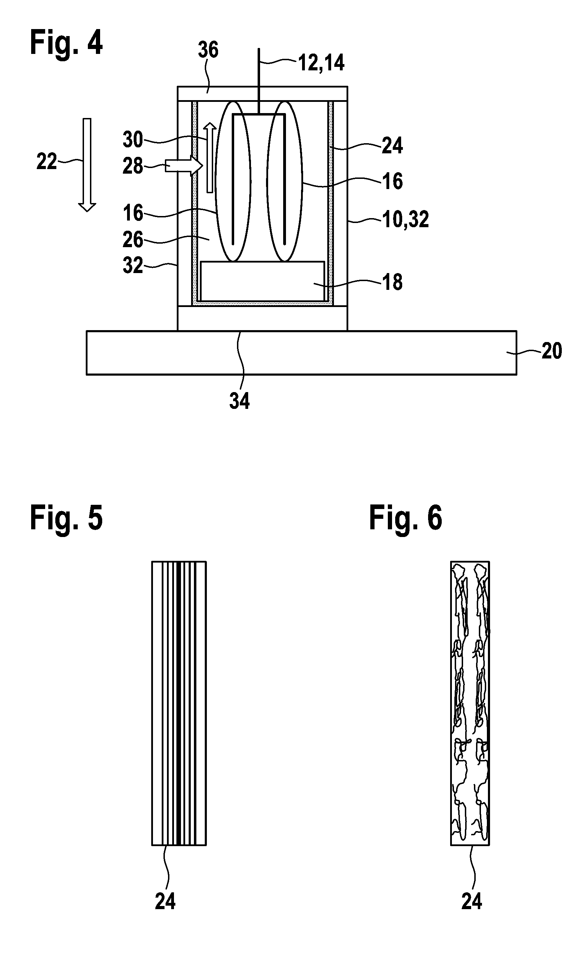

Figur 4 zeigt eine Batterie gemäß einer ersten bevorzugten Ausführungsvariante der Erfindung. Die erfindungsgemäße Batterie weist ein Gehäuse 10 mit einer Oberseite 36, einer Unterseite 34 und Seitenflächen 32 auf. In der vorliegenden bevorzugten Ausführungsvariante ist das Gehäuse 10 der Batterie quaderförmig ausgebildet und besitzt somit vier Seitenflächen 32, von denen in der Schnittdarstellung in Figur 4 lediglich zwei Seitenflächen 32 sichtbar sind. Es ist alternativ jedoch auch möglich, anstatt eines quaderförmigen Gehäuses 10 eine andere, beispielsweise zylinderförmige, Ausformung zu wählen, wobei in einem solchen Fall lediglich eine umlaufende Seitenfläche 32 vorhanden wäre.

Die innerhalb des Gehäuses vorhandenen Elektroden sind als Batteriewickel dargestellt.

Diese Elektroden sind mittels der Arretierung 18 an der Unterseite 34 des Gehäuses 10 fixiert. Eine weitere Fixierung erfolgt durch die Anschlüsse 12 und 14, welche in der Oberseite 36 des Gehäuses 10 ausgebildet sind. Um einen Transport von Lithium-Ionen zwischen den Elektroden zu gewährleisten, ist innerhalb des Gehäuses 10, das heißt zwischen den Elektroden, ein Elektrolyt 26 vorgesehen. Bevorzugt weist der Elektrolyt 26 Ethylencarbonat, Dimethylcarbonat, Diethylcarbonat oder Mischungen daraus auf. Bevorzugt besteht der Elektrolyt 26 aus Ethylencarbonat, Dimethylcarbonat, Diethylcarbonat oder Mischungen daraus. Vorzugsweise ist der Innenraum der Batterie bei einer Temperatur von 20°C derart mit dem Elektrolyten 26 befüllt, dass der obere Bereich des Innenraums der Batterie frei bleibt, also nicht mit dem Elektrolyten 26 gefüllt ist. Dieser freibleibende Bereich steht dem Elektrolytdampf zu dessen Ausbreitung zur Verfügung, welcher sich während des Betriebs aufgrund von Verdunstung/Verdampfung des Elektrolyten 26 bildet. Vorzugsweise ist der Innenraum der Batterie bei einer Temperatur von 20°C bis zu einer Füllhöhe von 20% bis 99% der Höhe der Seitenwand 32 (gemessen entlang einer senkrecht an der Seitenwand 32 verlaufenden Achse) gefüllt. Noch bevorzugter liegt die Füllhöhe zwischen 50% und 95%, noch bevorzugter zwischen 70% und 90%. Erfindungsgemäß ist an der Innenseite der Seitenwände 32 des Gehäuses 10 eine Kapillarstruktur 24 angeordnet. Als Kapillarstruktur im Sinne der vorliegenden Anordnung werden Kanäle und/oder Röhrchen, insbesondere eine über eine bestimmte Oberfläche verteilte Vielzahl von Kanälen und/oder Röhrchen verstanden, deren Abmessungen (Durchmesser oder Breite) derart ausgebildet sind, dass Oberflächeneffekte vordergründig zu beobachten sind. Solche bevorzugten Kapillarstrukturen 24 weisen Kanäle mit einer Breite oder Röhrchen mit einem Durchmesser von vorzugsweise zwischen 1 µm und 500 µm auf.

Durch die so ausgebildete Batterie entsteht während des Betriebs in der Seitenfläche 32 des Gehäuses 10 ein nach unten gerichteter, durch den Pfeil 22 in seiner Richtung gekennzeichneter Wärmestrom. Ein Teil dieser Wärme diffundiert, wie durch den Pfeil 28 gekennzeichnet, von der Seitenfläche 32 seitlich zum Elektrolyt 26. Der sich erwärmende Elektrolyt 26 wird, wie durch den Pfeil 30 gekennzeichnet, in den Kapillarstrukturen 24 aufgrund der Kapillarkraft oben gezogen.

In den Figuren 5 und 6 sind bevorzugte Ausführungsvarianten einer Kapillarstruktur 24 dargestellt. Wie in Figur 5 ersichtlich ist, ist die Kapillarstruktur 24 durch eine Vielzahl von Kanälen ausgebildet, die sich Bezug nehmend auf Figur 4 von der Unterseite 34 zur Oberseite 36 erstrecken. Alternativ kann die Kapillarstruktur 24 auch als Gestrick ausgebildet sein, wie in Figur 6 dargestellt ist. In einer bevorzugten Ausführungsvariante der Erfindung ist die genannte Kapillarstruktur 24 durch eine Kunststofffolie ausgebildet, die auf der Innenseite des vorzugsweise aus Metall ausgebildeten Gehäuses 10 angeordnet sind. Der Elektrolyt 26, der während des Betriebes der Batterie durch interne Wärmeentstehung erhitzt wird und dadurch verdampfen oder verdunsten kann, liegt zumindest teilweise innerhalb des Gehäuses 10 dampfförmig vor und kann beispielsweise im Bereich der Seitenflächen 32 abströmen. Eine Kühlplatte 20 ist direkt an der Unterseite 34 des Gehäuses 10 angeordnet, um den Batterieboden 34 zu kühlen. Daher ist die Unterseite 34 des Gehäuses 10 so kalt, dass der Elektrolytdampf 26 dort bei ausreichend großem Wärmeübergangskoeffizienten kondensiert. Der Batterieboden 34 ist somit sehr effizient genutzt. Ist der Elektrolyt 26 am Boden kondensiert, kann er nun über die Kapillarstruktur 24 entlang der Gehäuseinnenwand nach oben befördert werden. Bei dieser Bewegung wird der Elektrolyt 26 wieder kontinuierlich erwärmt - direkt durch Wärmeerzeugung innerhalb der Batterie und durch Wärme, die aus oberen Bereichen entlang der Gehäusewand 32 geleitet wird. Hierbei verdunstet beziehungsweise verdampft der Elektrolyt 26 wiederum bei ausreichend großem Wärmeübergangskoeffizienten und kann damit die Batterie aufgrund seiner Zirkulation effizient kühlen. Der Elektrolyt 26 besteht vorzugsweise aus flüchtigen organischen Lösungsmitteln.

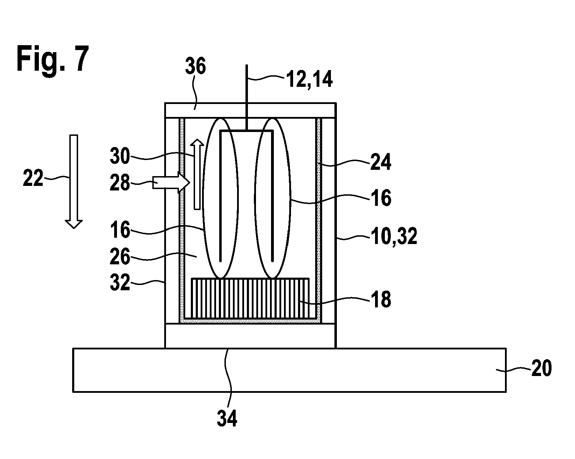

Eine weitere bevorzugte Ausführungsvariante der Erfindung ist in Figur 7 dargestellt. An den Seitenwänden 32 des Gehäuses 10 ist analog zu Figur 4 eine erfindungsgemäße Kapillarstruktur 24 angeordnet, die einen Kreislauf des Elektrolyten 26 innerhalb des Gehäuses 10 ermöglicht und somit eine effiziente Kühlung durch die Kühlplatte 20 ermöglicht. Im vorliegenden Ausführungsbeispiel ist es weiterhin vorgesehen, dass die Arretierung 18 zur Fixierung des mindestens einen Batteriewickels 16 eine Perforation aufweist. In einer besonders bevorzugten Ausführungsvariante der Erfindung ist die Arretierung 18 über ihre gesamte Oberfläche perforiert. Aufgrund dieser Perforation kann der gegebenenfalls dampfförmig vorliegende Elektrolyt 26 effizient mit der Unterseite 34 des Gehäuses 10 in Berührung kommen.

## Patentansprüche

1. Lithium-Ionen-Batterie mit einer ersten Elektrode, einer zweiten Elektrode und einem gasdichten Gehäuse (10), wobei die Elektroden jeweils als Batteriewickel (16) ausgebildet sind, wobei die erste Elektrode, die zweite Elektrode und ein dazwischen liegender Separator spiralförmig ineinander eingewickelt sind, wobei das Gehäuse (10) eine Unterseite (34), eine Oberseite (36) und mindestens eine Seitenfläche (32) aufweist und ein Elektrolyt (26) innerhalb des Gehäuses (10) angeordnet ist,
**dadurch gekennzeichnet, dass**
sich der Batteriewickel (16) lediglich über einen Teil der Unterseite (34) des Gehäuses (10) erstreckt, so dass zwischen dem Batteriewickel (16) und der Seitenfläche (32) des Gehäuses (10) umlaufend eine Lücke ausgebildet ist, durch die ein Stofftransport des Elektrolyten (26) erfolgen kann, wobei auf der Innenseite einer Seitenfläche (32) des Gehäuses (10) mindestens eine Kapillarstruktur (24) angeordnet ist, wobei die mindestens eine Kapillarstruktur (24) sich von der Unterseite (34) zur Oberseite (36) des Gehäuses (10) erstreckt.

2. Lithium-Ionen-Batterie nach Anspruch 1, wobei die mindestens eine Kapillarstruktur (24) durch eine Kunststofffolie mit Kanalstrukturen oder als Gestrick ausgebildet ist.

3. Lithium-Ionen-Batterie nach mindestens einem der vorhergehenden Ansprüche, wobei an der Unterseite (34) des Gehäuses (10) eine Kühlplatte (20) vorgesehen ist.

4. Lithium-Ionen-Batterie nach mindestens einem der vorhergehenden Ansprüche, wobei die Kapillarstruktur (24) mindestens 50 % der inneren Seitenfläche (32) des Gehäuses (10) bedeckt.

5. Lithium-Ionen-Batterie nach Anspruch 4, wobei die Kapillarstruktur (24) die gesamte innere Seitenfläche (32) des Gehäuses (10) bedeckt.

6. Lithium-Ionen-Batterie nach mindestens einem der vorhergehenden Ansprüche, wobei innerhalb des Gehäuses (10) mindestens ein Batteriewickel (16) angeordnet ist, und der mindestens eine Batteriewickel (16) mit einem ersten Anschluss (12) und einem zweiten Anschluss (14) elektrisch verbunden ist, und der erste Anschluss (12) und der zweite Anschluss (14) zumindest teilweise außerhalb des Gehäuses (10) angeordnet sind, wobei innerhalb des Gehäuses (10) mindestens eine Arretierung (18) für den mindestens einen Batteriewickel (16) angeordnet ist und die Arretierung (18) eine Perforation aufweist.

7. Lithium-Ionen-Batterie nach Anspruch 6, wobei die Arretierung (18) an der Unterseite (34) des Gehäuses (10) angeordnet ist und/oder wobei der erste Anschluss (12) und der zweite Anschluss (14) auf der Oberseite (36) des Gehäuses (10) angeordnet sind.

8. Kraftfahrzeug mit einer Lithium-Ionen-Batterie nach einem der vorhergehenden Ansprüche, wobei die Lithium-Ionen-Batterie mit einem Antriebssystem des Kraftfahrzeuges verbunden ist.

## Claims

1. Lithium-ion battery having a first electrode, a second electrode and a gas-tight housing (10), wherein the electrodes are each in the form of a battery winding (16), wherein the first electrode, the second electrode and a separator which is situated between the said electrodes are wound into one another in a spiral manner, wherein the housing (10) has a bottom face (34), a top face (36) and at least one side face (32), and an electrolyte (26) is arranged within the housing (10), **characterized in that** the battery winding (16) extends only over a portion of the bottom face (34) of the housing (10), so that a gap is formed circumferentially between the battery winding (16) and the side face (32) of the housing (10), it being possible for mass transport of the electrolyte (26) to be performed through the said gap, wherein at least one capillary structure (24) is arranged on the inside of a side face (32) of the housing (10), wherein the at least one capillary structure (24) extends from the bottom face (34) to the top face (36) of the housing (10) .

2. Lithium-ion battery according to Claim 1, wherein the at least one capillary structure (24) is formed by a plastic film with channel structures or is in the form of a mesh.

3. Lithium-ion battery according to at least one of the preceding claims, wherein a cooling plate (20) is provided on the bottom face (34) of the housing (10).

4. Lithium-ion battery according to at least one of the preceding claims, wherein the capillary structure (24) covers at least 50% of the inner side face (32) of the housing (10).

5. Lithium-ion battery according to Claim 4, wherein the capillary structure (24) covers the entire inner side face (32) of the housing (10).

6. Lithium-ion battery according to at least one of the preceding claims, wherein at least one battery winding (16) is arranged within the housing (10), and the at least one battery winding (16) is electrically connected to a first connection (12) and a second connection (14), and the first connection (12) and the second connection (14) are arranged at least partially outside the housing (10), wherein at least one locking means (18) for the at least one battery winding (16) is arranged within the housing (10), and the locking means (18) has a perforation.

7. Lithium-ion battery according to Claim 6, wherein the locking means (18) is arranged on the bottom face (34) of the housing (10), and/or wherein the first connection (12) and the second connection (14) are arranged on the top face (36) of the housing (10).

8. Motor vehicle having a lithium-ion battery according to one of the preceding claims, wherein the lithium-ion battery is connected to a drive system of the motor vehicle.

## Revendications

1. Batterie lithium-ions avec une première électrode, une deuxième électrode et un boîtier étanche au gaz (10), dans laquelle les électrodes sont chacune réalisés sous la forme de spires de batterie (16), dans laquelle la première électrode, la deuxième électrode et un séparateur disposé entre elles sont enroulés en spirale les uns dans les autres, dans laquelle le boîtier (10) présente un côté inférieur (34), un côté supérieur (36) et au moins une face latérale (32), et un électrolyte (26) est disposé à l'intérieur du boîtier (10), **caractérisée en ce que** la spire de batterie (16) ne s'étend que sur une partie du côté inférieur (34) du boîtier (10), de telle manière qu'un espace périphérique soit formé entre la spire de batterie (16) et la face latérale (32) du boîtier (10), espace à travers lequel il peut se produire un transport de matière de l'électrolyte (26), dans laquelle au moins une structure capillaire (24) est disposée sur le côté intérieur d'une face latérale (32) du boîtier (10), dans laquelle ladite au moins une structure capillaire (24) s'étend du côté inférieur (34) au côté supérieur (36) du boîtier (10).

2. Batterie lithium-ions selon la revendication 1, dans laquelle ladite au moins une structure capillaire (24) est formée par une feuille de matière plastique avec des structures de canaux ou sous forme de tricot.

3. Batterie lithium-ions selon au moins une des revendications précédentes, dans laquelle il est prévu une plaque de refroidissement (20) sur le côté inférieur (34) du boîtier (10).

4. Batterie lithium-ions selon au moins une des revendications précédentes, dans laquelle la structure capillaire (24) couvre au moins 50 % de la face latérale intérieure (32) du boîtier (10).

5. Batterie lithium-ions selon la revendication 4, dans laquelle la structure capillaire (24) couvre la totalité de la face latérale intérieure (32) du boîtier (10) .

6. Batterie lithium-ions selon au moins une des revendications précédentes, dans laquelle au moins une spire de batterie (16) est disposée à l'intérieur du boîtier (10) et ladite au moins une spire de batterie (16) est reliée électriquement à une première borne (12) et à une deuxième borne (14), et la première borne (12) et la deuxième borne (14) sont disposées au moins partiellement à l'extérieur du boîtier (10), dans laquelle au moins un arrêt (18) pour ladite au moins une spire de batterie (16) est disposé à l'intérieur du boîtier (10) et l'arrêt (18) présente une perforation.

7. Batterie lithium-ions selon la revendication 6, dans laquelle l'arrêt (18) est disposé sur le côté inférieur (34) du boîtier (10) et/ou dans laquelle la première borne (12) et la deuxième borne (14) sont disposées sur le côté supérieur (36) du boîtier (10).

8. Véhicule automobile avec une batterie lithium-ions selon l'une quelconque des revendications précédentes, dans lequel la batterie lithium-ions est reliée à un système d'entraînement du véhicule automobile.
